# EUROPEAN PATENT SPECIFICATION

(11) **EP 4 362 687 B1**
(45) Date of publication and mention of the grant of the patent: **13.08.2025**
(21) Application number: 22732278.1
(22) Date of filing: 27.06.2022
(51) Int. Cl.: A23C 9/13, A23C 11/04, A23C 11/08

(54) **NON-DAIRY CREAMER COMPOSITION**
MILCHFREIE KAFFEEWEISSERZUSAMMENSETZUNG
COMPOSITION DE COLORANT À CAFÉ NON LAITIER

(30) Priority: 28.06.2021 GB 202109283
(43) Date of publication of application: 08.05.2024
(73) Proprietor: Koninklijke Douwe Egberts B.V., 3532 AD Utrecht (NL)
(72) Inventor: ANDREWS, Jessica, Banbury Oxfordshire OX16 2QU (GB); HARRIS, Gayle, Banbury Oxfordshire OX16 2QU (GB)
(74) Representative: Boult Wade Tennant LLP
(86) International application number: PCT/EP2022/067554
(87) International publication number: WO 2023/274952

(56) References cited:
- US-A- 3 579 356
- US-A1- 2011 293 800
- US-A1- 2012 321 766
- US-A1- 2016 198 731
- US-A1- 2017 150 731
- US-A1- 2018 055 079
- KIM WOOJEONG ET AL: "Dairy and plant proteins as natural food emulsifiers", TRENDS IN FOOD SCIENCE AND TECHNOLOGY, ELSEVIER SCIENCE PUBLISHERS, GB, vol. 105, 22 September 2020 (2020-09-22), pages 261 - 272, XP086319914, ISSN: 0924-2244, [retrieved on 20200922], DOI: 10.1016/J.TIFS.2020.09.012

## Description

The invention relates to a non-dairy creamer composition for use in a beverage, wherein the composition comprises 1 to 6 wt.% of two or more naturally-occurring amino acids, and 0.5 to 4 wt.% sodium caseinate. The invention also relates to a kit comprising one or more beverage ingredients and said non-dairy creamer composition; a method of providing a beverage by mixing the creamer composition or the kit with water, and the use of one or more amino acids in a creamer composition to prevent flocculation upon reconstitution with water to form a beverage.

Non-Dairy Creamers (NDCs) are added to beverages to provide creaminess and whitening, thus serving as a milk substitute. They are used predominantly in coffee, but can also be used in beverages such as tea and hot chocolate. They can be provided in powder form, to be reconstituted upon addition of water, or they can be provided in a concentrated liquid form, such as in a small sachet, for addition to the rest of a beverage. A typical creamer comprises a fat component, a protein, a bulking agent which is usually a sugar (e.g. glucose syrup, sucrose, or dextrose) and a stabilising system of emulsifiers and buffer salts, each of which bring different functional properties.

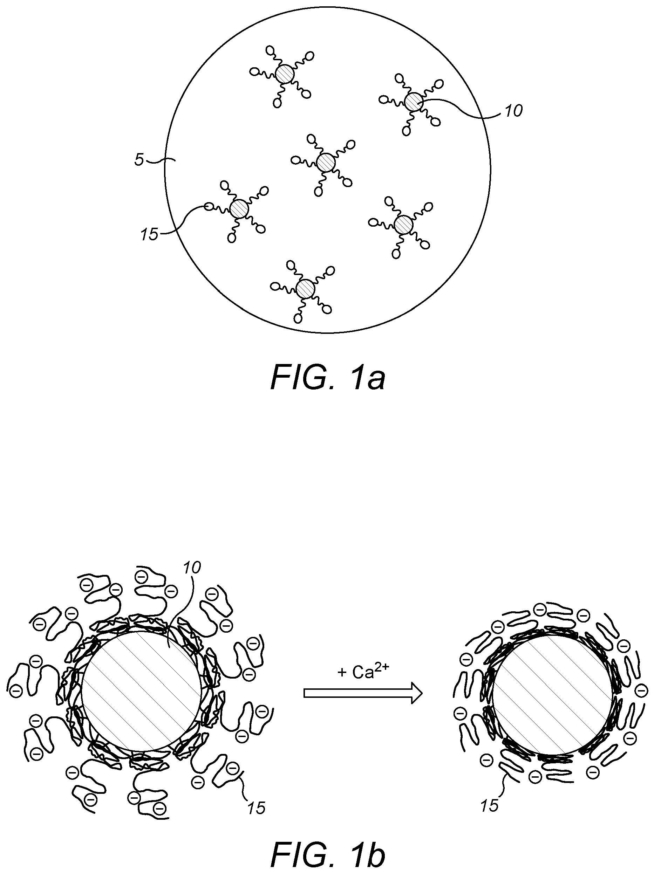

Despite their name, NDCs contain a milk derived protein, sodium caseinate, which is adsorbed at the oil/water interface, leading to a decrease in interfacial tension, which in turn stabilises the emulsion system. This is demonstrated in Figure 1a, which shows a water dispersion 5 that includes the bulking agent (typically glucose syrup). The oil droplets 10 are surrounded by sodium caseinate molecules 15 as surface active components. The 'non-dairy' terminology refers to the fat component, which does not contain dairy fats and can be, for example, coconut oil, cocoa butter, palm kernel oil, and rapeseed oil. When glucose syrup is used as a bulking agent, it also enhances flavour, creaminess and texture, and provides additional stability against emulsion separation due to the increase in viscosity it brings to the system.

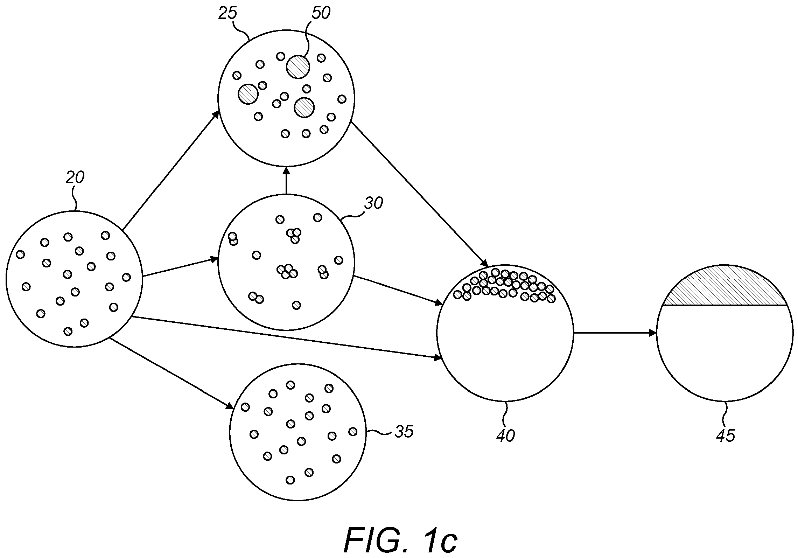

Proteins are very sensitive to changes in pH, temperature and hard water, which result in self-association and subsequent destabilisation of the emulsion. In particular, when the proteins are de-stabilised and do not surround the fat droplets sufficiently, the fat droplets start to coagulate (i.e. they are attracted to each other due to their shared hydrophobic properties), leading to the emulsion becoming less stable. Eventually, phase separation occurs. Figure 1c shows the process of a stable emulsion 20 losing its stability and eventually succumbing to phase separation 40. In particular, as the proteins (i.e. the caseinate) surround less of the fat droplets 10, the fat droplets 10 are attracted to each other by hydrophobic forces. The fat droplets 10 can coalesce 25 to form some very large fat droplets 50. The fat droplets 10 may also undergo flocculation 30, whereby the small fat droplets 10 clump together into a floc. In addition, Ostwald ripening 35 may occur, whereby small fat droplets 10 disappear by dissolution, and are deposited on the larger droplets. Flocculation 30 and coalescence 25 can both lead to creaming 40, and then eventually phase separation 45. This phase separation 45 of the creamer composition is undesirable.

It is the formation of a stable emulsion that contributes to the desired organoleptic properties of the finished product. The creation of small fat droplets during homogenisation leads to an increased fat surface area which in turn enhances the creamy perception of the drink. The fat droplet surface area also impacts the whitening power of the creamer whereby a higher total surface area causes greater light reflectance from the emulsion. If the colloidal system is insufficiently stabilised, these properties are negatively impacted leading to a reduced level of consumer satisfaction.

Since creamers are often added to hot, acidic coffee (which has a pH of between approximately 4.1 and 5.3), there is a tendency for feathering to occur if the creamer is not sufficiently stabilised. Stabilisers can be added and tend to take the form of phosphate buffers which are added in order to protect the protein by buffering the pH of the system as well as sequestering hard water ions such as calcium, and to a lesser extent, magnesium.

Phosphate salts are employed as a means of providing stability to the sodium caseinate present within NDCs. The two salts which are primarily used are Dipotassium Phosphate (DKP) and Sodium Hexametaphosphate (SHMP), which are given the E-numbers E340ii and E452i, respectively. Their combined functionalities prevent protein aggregation in cup by counteracting the impact of low pH and hard water.

Dipotassium Phosphate (DKP) has the chemical formula K₂HPO₄ and its primary function within NDCs is to buffer the pH resulting from the acidic coffee. DKP in aqueous solution (at 1%) has a pH of 8.6-9.4; this therefore increases the pH of the NDC which in itself helps to counteract the pH drop resulting from addition of coffee. DKP can be made by reaction of phosphoric acid and potassium chloride. It is amphoteric due to its ability to dissociate in aqueous solutions into phosphoric acid and the conjugate base, dihydrogen phosphate ([H₂PO₄]⁻).

The acid dissociation constants, or pKa values, for DKP are 2.12, 7.21 and 12.67. Therefore, given that the buffering range of any given buffer extends from 1 pH unit either side of the pKa as a general rule, the buffering regions for DKP are in the region of 1.12-3.12, 6.21-8.21 and 11.67-13.67. In the case of NDCs, the middle buffer range of 6.21-8.21 is the most applicable to the system as the target pH of a coffee beverage is near neutral.

Since sodium caseinate is prone to aggregation and reduced solubility as the pH of the system nears its isoelectric point of approximately 4.5, maintaining an in-cup pH as high as possible is key to avoiding protein aggregation and reduced emulsion stability. DKP has therefore been used as a buffer in creamer compositions.

Sodium Hexametaphosphate (SHMP) is more correctly referred to as sodium polymetaphosphate. It is sold commercially as a mixture of metaphosphates (NaPO₃) which include the cyclic hexamer, SHMP with its chemical formula Na₆[(PO₃)₆]. The main application of SHMP in creamer compositions is as a sequestrant of hard water ions such as Ca²⁺ and Mg²⁺. Figure 1b shows the effect of such Ca²⁺ ions on sodium caseinate molecules 15 that surround an oil droplet 10. The calcium ions bind to the caseinate 15, which reduces the net negative charge, resulting in reduced electrostatic stabilisation. In the absence of SHMP as a sequestrant, the Ca²⁺ and Mg²⁺ cations would complex with the sodium caseinate 15, and can lead to aggregation and micelle formation.

Casein micelles are less surface active than sodium caseinate, leading to a larger fat droplet size within the emulsion and thus reduced stability. By adding SHMP, the calcium ions are bonded to the PO₄ groups by electrostatic attraction thus rendering them less able to interact with the sodium caseinate and cause reduced stability. Sodium phosphates also function by exchanging their monovalent Na⁺ ions for heavier, divalent Ca²⁺ and/or Mg²⁺ ions which are more strongly bound; this therefore prevents interaction of these hard water ions with the sodium caseinate.

Thus far, SHMP as a chelating agent, and DKP as a buffering agent, have formed a satisfactory stabilising system for creamer compositions, and have proved effective in maintaining the composition as a stable emulsion, especially upon mixing with acidic liquid coffee containing hard water.

However, consumers are increasingly aware of the concept of 'clean label' and what it means to shop 'clean', despite these typically being industry terms. Generally, consumers seek simplicity, by way of minimal and familiar ingredients listed on the package.

Consumers prefer products to have ingredients that sound more natural and less processed. Therefore, ingredients that sound artificial, or those denoted by an E-number, often elicit a negative response, regardless of whether they are artificial or naturally sourced. As a result, there is a need to provide natural, clean label alternatives which can replace current E-numbered additives within existing products. There is also a need to provide a stabilising system for a non-dairy creamer composition that is both clean label, and which demonstrates the ability to act as a chelator and a buffer at least as well as the known system employing DKP and SHMP. Any potential alternative stabilising system needs to exhibit comparable stabilising properties, with minimal negative side effects, and minimum impact on the taste of the beverage, while being derived from natural sources.

US2011/293800 relates to a liquid creamer which is low protein or protein-free. The exemplary compositions comprise sodium tripolyphasphate and dipotassium phosphate. The preferred amount of such chelating agents is 0.1 to 0.3wt% and the examples employ 0.11 wt% chelating agent.

US2012321766 relates to a liquid creamer containing an antioxidant formed from gum Arabic and a carotenoid component. The exemplary compositions comprise disodium and dipotassium phosphate.

The present invention seeks to provide an improved clean label stabilising system for a non-dairy creamer, to tackle the problems of the prior art or at least to provide a commercially viable alternative thereto.

In a first aspect of the invention, there is provided a non-dairy creamer composition for use in a beverage, wherein the composition is according to claim 1.

The present disclosure will now be described further. In the following passages, different aspects/embodiments of the disclosure are defined in more detail. Each aspect/embodiment so defined may be combined with any other aspect/embodiment or aspects/embodiments unless clearly indicated to the contrary. In particular, any feature indicated as being preferred or advantageous may be combined with any other feature or features indicated as being preferred or advantageous.

Non-dairy creamer compositions are known compositions that can be added to beverages such as tea or coffee to substitute milk. They are also intended to make the resulting end product of a paler (white/milkier) colour, and are generally available in powdered form, for reconstitution with water, or in a concentrated liquid form (e.g. a slurry). A common commercial creamer composition currently in use is Coffee Mate^{™}.

As explained, non-dairy creamers include a fat source which is not derived from dairy origins, and instead use sources such as coconut oil, cocoa butter, palm kernel oil and rapeseed oil. The composition does still contain sodium caseinate in an amount of from 0.5 to 4 wt.%, which is a phosphoprotein derived from milk, and is commercially available from a variety of suppliers. Preferably, the sodium caseinate is present in an amount of from 1 to 3.5 wt.%, more preferably from 1.5 to 3 wt.%, and most preferably from 2 to 2.5 wt.%. The amount of the components is based on the total dry weight of the composition. The dry weight refers to the weight of the composition when it comprises less than 3 wt.% of water. This is generally in a powder form.

The creamer composition has from 1 to 6 wt.% of two or more naturally-occurring amino acids, which acts as the stabilising system. This stabilising system provides effective chelation and buffering properties, and is able to be used in the non-dairy creamer composition instead of DKP and SHMP. In particular, an amino acid can be used as both the buffer and the chelating agent, or the composition may include two or more different amino acids, where one or more amino acids acts as the chelating agent, and one or more different amino acids act as the buffer.

The two or more naturally-occurring amino acids are preferably present in the composition in an amount of from 1.5 to 5 wt.%, more preferably in an amount of from 2 to 4.5 wt.%, and most preferably in an amount of from 2.5 to 4 wt.%.

The amino acids are naturally-occurring, meaning that the amino acids include only the proteinogenic amino acids that can be incorporated biosynthetically into proteins during translation. There are twenty naturally-occurring amino acids, as summarised in Table 1 below.

Amino acids are optically active, chiral compounds, which consist of a central carbon atom bonded to an amino group (-NH₂), a carboxyl group (COOH) and a side chain (R) component which is responsible for characterisation of each particular amino acid. Amino acids can all be sequenced by the genetic code to form proteins. Each of these amino acids have the same general structure as shown below (with the exception of proline which has an aromatic ring joining the chiral carbon and the nitrogen of the amine group).

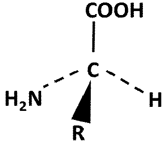

Amino acids can also be classified depending on the structure of their side (R) group; whether they are basic (negatively charged), acidic (positively charged), polar (uncharged), non-polar (aliphatic uncharged) or aromatic (cyclic). This classification is outlined in Table 1.

In aqueous solutions, amino acids exist as zwitterions, since they have both positively charged (NH₃⁺) and negatively charged (COO⁻) groups as well as their individual R groups, some of which can also be ionised. They are therefore amphoteric since they can act as both an acid (proton donor) and a base (proton acceptor) dependent on the pH of the solution. The ionisation sequences are specific to each amino acid. Upon increasing the concentration of OH⁻, the conjugate acid is converted to the zwitterionic form, with pKa₁ indicating the point at which half of the acid has been ionised. The zwitterionic form is reached at the isoelectric point, with a pH of pl. Further addition of OH⁻ leads to the negatively charged form as pKa₂. In the same way as for DKP, the buffer ranges for each amino acid can be found 1 pH unit either side of the pKa values. Table 1 outlines the pKa values of each of the 20 amino acids along with their pl and pKa values for each individual ion.

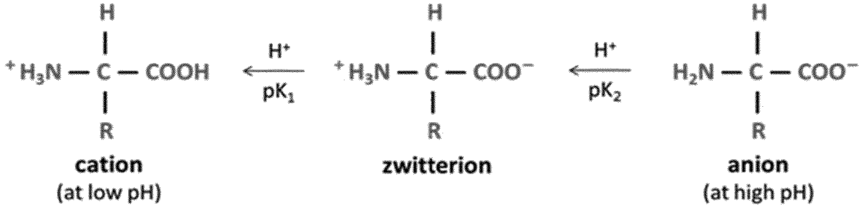

**Table 1**

| **Amino Acid** | **Category** | **pI** | **pKa Value** | | |
|---|---|---|---|---|---|
| | | | **-COOH 1** | **- NH3+ 2** | **R Side Chain** |
| Arginine | Basic | 10.76 | 2.17 | 9.04 | 12.48 |
| Lysine | Basic | 9.60 | 2.18 | 8.95 | 10.53 |
| Histidine | Basic | 7.60 | 1.82 | 9.17 | 6.00 |
| Aspartic Acid | Acidic | 2.77 | 1.88 | 9.60 | 3.65 |
| Glutamic Acid | Acidic | 3.22 | 2.19 | 9.67 | 4.25 |
| Asparagine | Polar | 5.41 | 2.02 | 8.80 | |
| Cysteine | Polar | 5.07 | 1.96 | 10.13 | 8.18 |
| Glutamine | Polar | 5.65 | 2.17 | 9.13 | |
| Serine | Polar | 5.58 | 2.21 | 9.15 | |
| Threonine | Polar | 5.60 | 2.21 | 9.10 | |
| Alanine | Non-Polar | 6.00 | 2.34 | 9.69 | |
| Glycine | Non-Polar | 6.02 | 2.35 | 9.78 | |
| Isoleucine | Non-Polar | 6.02 | 2.36 | 9.60 | |
| Leucine | Non-Polar | 6.01 | 2.36 | 9.60 | |
| Methionine | Non-Polar | 5.74 | 2.28 | 9.21 | |
| Proline | Non-Polar | 6.30 | 1.99 | 10.60 | |
| Valine | Non-Polar | 5.96 | 2.32 | 9.62 | |
| Phenylalanine | Aromatic | 5.48 | 1.83 | 9.13 | |
| Tyrosine | Aromatic | 5.66 | 2.20 | 9.11 | 10.07 |
| Tryptophan | Aromatic | 5.89 | 2.83 | 9.39 | |

Advantageously, the amino acid can act as a means of buffering a given system. It is known that specific proteins give rise to differing buffering ranges. Proteins are the main buffer systems in the body, for example, whereby they account for two thirds of the buffering power of the blood and almost all buffering within cells. Although proteins are well-known buffering agents in the scientific field, the addition of individual isolated amino acids to food systems in order to impart a buffering effect is not known, and is especially not known or used in creamer compositions (and non-dairy creamer compositions).

As mentioned in the Examples, acidic amino-acids (i.e. aspartic acid and glutamic acid) are not desirable in the creamer as they may have an adverse effect on particle size and introduce sour taste notes. Accordingly, the composition is free from these acidic amino-acids. Optionally the composition may also be free from cysteine.

Amino acids can form stable five-membered chelate complexes with metal ions through both their amine and carboxylate groups, as depicted below.

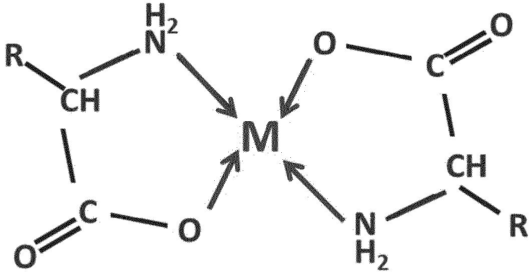

Several amino acids also have an extra chelation site due to their side chain composition, for example histidine's imidazole ring, the phenol ring of tyrosine and the thiol (sulphur containing) group of cysteine are all important in the formation of metal chelates. Amino acids have also been advantageously found to form weak complexes with alkali metal ions such as Ca²⁺ and Mg²⁺, in a similar mechanism to the currently used SHMP.

The use of amino acids in a creamer composition together with sodium caseinate has shown unexpectedly beneficial results. The amino acids are able to act as both chelating agents, and as buffering agents, and have shown an excellent ability to proficiently stabilise the NDC composition of the invention, without negatively impacting the other properties of the NDC, such as taste, particle size distribution, and emulsion stability. The amino acids are appealing to consumers due to their natural origin, and function at a comparable level to the existing stabilising system of SHMP and DKP. Amino acids as a clean label stabilising system (buffering and chelating) can provide comparable or improved emulsion stability within non-dairy creamer compositions.

The composition preferably comprises from 30 to 80 wt.%, preferably from 40 to 65 wt.%, or more preferably from 45 to 70 wt.%, or more preferably 45 to 55 wt.%, of one or more sugars and/or sweeteners. Examples of such sugars and/or sweeteners include glucose syrup, sucrose, fructose, and dextrose. Most preferably, the one or more sugars comprises glucose syrup. This sugar source is the most compatible and stable within the creamer composition, and provides an ideal viscosity for both emulsion stability and for sensory purposes.

The composition can comprise from 25 to 60 wt.% of a non-dairy fat. Preferably, the composition comprises from 25 to 55 wt.%, more preferably from 30 to 50 wt.%, and most preferably from 40 to 50 wt.% of the non-dairy fat. Such examples of non-dairy fats include coconut oil, cocoa butter, palm kernel oil, and rapeseed oil. Most preferably, the non-dairy fat is coconut oil. Coconut oil has the most ideal solid fat content to obtain a creamer composition with the desired viscosity and organoleptic properties.

The composition may comprise from 0.2 to 2 wt.%, preferably from 0.5 to 1.5 wt.%, or more preferably from 0.7 to 1.2 wt.%, of mono- or di-glycerides of fatty acids (E471), which acts as an emulsifier, helping the fat droplets to mix with the water particles.

The composition may comprise from 0.05 to 1 wt.%, preferably from 0.1 to 0.7 wt.%, or more preferably from 0.2 to 0.5 wt.%, of sodium stearoyl lactylate (E481), which is a combination of stearic acid and lactic acid, and acts as an emulsifier and a stabiliser.

The composition is preferably substantially free from phosphates and, preferably free from stabilisers, chelating agents and buffering agents. This means that the creamer composition preferably does not contain any further stabilisers, chelating agents or buffering agents in addition to the amino acids, and any sodium stearoyl lactylate that are present as stabilisers. For example, it is preferred that the composition contains only the one or more amino acids as the stabilising system, optionally with sodium stearoyl lactylate, and without any DKP or SHMP, or any other additional chelating or buffering agent.

The creamer composition can be a spray-dried or agglomerated powder, or it can be a liquid creamer composition. Both techniques of spray-drying and freeze-drying are widely implemented and well-known with the coffee, dairy, and dairy alternatives industry. Spray-dried and freeze-dried powdered non-dairy creamer compositions are stable in packaging for a considerable length of time, and can be stored in appropriate packaging (such as sachets), and incorporated into a beverage when desired.

Alternatively, the creamer composition can be in the form of a liquid creamer composition. An example of such a liquid creamer composition is one that contains between 30 and 70 wt.% of water. Usually, the creamer composition is quite concentrated (i.e. like a slurry), with around 50 wt.% solids content.

When the non-dairy creamer composition is a powder, it can be added directly to a beverage, or it can be reconstituted into a liquid creamer composition, and subsequently added to a beverage. However, for convenience of the user, it is more commonly added to a hot beverage (such as coffee) in powder form using, for example, a teaspoon, and is then subsequently stirred into the beverage to have an effect equivalent to adding fresh milk or cream.

After reconstitution with water such that the composition comprises from 30 to 70 wt.% of water, the liquid non-dairy creamer composition has a pH of from 6.5 to 8.5, and preferably from 7 to 8. This is the ideal pH for addition to an acid coffee, to obtain a final beverage with a pH around neutral.

In some embodiments the one or more of a certain amino acid is a chelating agent, and a different amino acid (or multiple amino acids) functions as the buffering agent.

A creamer composition with a stabilising system having one amino acid as the chelating agent, and one amino acid as the buffering agent selected from this list has proven to be a particularly proficient stabilising system for replacing the previously-used system that employed DKP and SHMP.

The two or more naturally-occurring amino acids comprise two different amino acids, comprising:
(a) 0.5 to 3.5 wt.% based on the total weight of the dried composition of a first amino acid selected from the group consisting of: arginine, histidine, tyrosine, alanine, glycine, and cysteine; and
(b) 0.5 to 2.5 wt.% based on the total weight of the dried composition of a second amino acid selected from the group consisting of cysteine, threonine, tyrosine, alanine, glycine, proline, and valine.

0.5 to 3.5 wt.% of an amino acid selected from the list of components given in (a) is the optimum amount and type of amino acid for serving as an effective buffering agent. In addition, 0.5 to 2.5 wt.% of a second amino acid selected from the list provided in part (b) is the ideal amount and type of amino acid to function as a chelating agent, combatting the issue of Ca²⁺ and Mg²⁺ cations present in water. The combination of the specific amounts of such first and second amino acids leads to a particularly beneficial stabilising system for use in a creamer composition, which is able to effectively and completely replace the stabilising system of DKP and SHMP, and maintain an appropriate particle size distribution of the creamer composition.

Preferably, the first amino acid is present in an amount of from 1 to 3 wt.%, and more preferably from 1.5 to 2.5 wt.%, based on the total weight of the dried composition. The second amino acid is preferably present in an amount of from 0.7 to 2 wt.%, more preferably in an amount of from 0.8 to 1.5 wt.%, and most preferably in an amount of from 0.9 to 1.3 wt.%, based on the total weight of the dried composition.

In the composition:
(i) the first amino acid is histidine, and the second amino acid is alanine, glycine, proline, or valine; or
(ii) the first amino acid is alanine, and the second amino acid is tyrosine; or
(iii) the first amino acid is cysteine, and the second amino acid is threonine or tyrosine; or
(iv) the first amino acid is arginine, and the second amino acid is glycine.

The specific combinations of amino acids in systems (i) to (iv) give rise to unexpectedly advantageous stabilising compositions for use in creamer compositions. In particular, the first amino acid in each system (i.e. histidine, alanine, cysteine and arginine) functions as a particularly effective buffering agent, when used in combination with one of the second amino acids subsequently listed. Cysteine on its own is also advantageously able to function as both a buffer and a chelating agent. These specific combinations of amino acids have proven to show comparable stabilising properties, equivalent to, or improved over, those of DKP and SHMP, and also do not negatively impact the organoleptic properties of the creamer composition.

Described herein but not claimed, the composition may comprise one naturally-occurring amino acid and further comprise sodium bicarbonate and/or trisodium citrate. In this regard, just one naturally-occurring amino acid can be used as a substitute for DKP (i.e. as the buffering agent), and then the SHMP can be replaced with sodium bicarbonate and/or trisodium citrate. On the other hand, some SHMP can be replaced with an amino acid, and some additional trisodium citrate and/or sodium bicarbonate can be added to obtain the desired chelating effect.

In a further aspect of the invention, there is provided a kit comprising:
(a) one or more beverage ingredients; and
(b) the non-dairy creamer composition of the first aspect of the invention.

A kit containing the creamer composition is particularly advantageous, as it allows the beverage to be made at any point that the consumer desires. The one or more beverage ingredients can be a liquid (e.g. in a can or bottle), or a powder, for reconstitution with water. The non-dairy creamer composition can also be in the form of a liquid (e.g. in a sachet), or in the form of a powder.

The components (a) and (b) can be together in the same package (e.g. both mixed together as dry powders, for reconstitution with water, or together as one liquid beverage). The components (a) and (b) can also be packaged separately, so that a desired amount of the creamer composition can be added to the one or more beverage ingredients. When packaged separately, each of components (a) and (b) can be a powder or liquid, as desired.

In a further aspect of the invention, there is provided a method of providing a beverage comprising mixing the creamer composition of the first aspect of the invention, or the kit of the invention, with water. The creamer composition and the kit described herein are advantageous in methods of preparing a beverage when the consumer has limited beverage making facilities, and possibly when only water is available, such as in hotel rooms, or on aeroplanes. The creamer composition of the present invention has good organoleptic properties upon reconstitution with water, mimicking the effects of a fresh dairy substance, such as milk or cream, and is stable in such a form.

In a further aspect of the invention described herein but not claimed, there is provided the use of one or more amino acids in a creamer composition to prevent flocculation upon reconstitution with water to form a beverage. The use of one or more amino acids as a stabilising system in a creamer composition, as described herein, is particularly advantageous. The amino acids can coordinate with the hard water ions, including Ca²⁺ and Mg²⁺, to prevent flocculation and the formation of residual scum on the surface of the beverage, while being a 'natural'/'clean-label' alternative to SHMP and DKP.

The invention is further illustrated by way of figures 1a to 1c, 2a to 2e, 3a to 3d, and 4a to 4f, wherein:
- Figure 1a shows the general components of an NDC composition.
- Figure 1b shows the impact of Ca²⁺ on the stability of an oil droplet surrounded by caseinate.
- Figure 1c shows the possible routes of an NDC to phase separation.
- Figures 2a to 2d show the particle size distribution graphs of various NDCs, including the reference composition, and NDCs where the DKP is replaced with different amino acids. The size classes in µm is shown on the x-axis, and the volume density is shown on the y-axis.
- Figure 2e shows the particle size distribution graph of an NDC where asparagine is a replacement for DKP, and is separately a replacement for SHMP, as well as the reference composition. The size classes in µm is shown on the x-axis, and the volume density is shown on the y-axis.
- Figures 3a to 3d show the particle size distribution graphs of various NDCs including the reference composition, and NDCs where the SHMP is replaced with different amino acids. The size classes in µm is shown on the x-axis, and the volume density is shown on the y-axis.
- Figures 4a to 4f show the particle size distribution graphs of various NDCs including the reference composition, and NDCs where both the DKP and the SHMP have each been replaced with an amino acid. The size classes in µm is shown on the x-axis, and the volume density is shown on the y-axis.

### Examples

The invention will now be described further in relation to the following non-limiting examples.

Various experiments were carried out to identify amino acids that are suitable for use in a creamer composition, as a stabilising system. A non-dairy creamer reference recipe was used as the main reference composition. On dry basis, a reference creamer composition is comprised of the components that are listed in table 2 below.

**Table 2**

| **Components of reference creamer slurry composition** | **Weight percent without water (i.e. weight percent of dried composition)** | **Weight percent with water** |
|---|---|---|
| Glucose syrup | 55.62% | 38.90% |
| Coconut oil | 35.00% | 17.50% |
| Sodium caseinate | 2.20% | 1.10% |
| Mono/Diglycerides of Fatty Acids (E471) | 0.77% | 0.39% |
| Sodium Stearoyl lactylate (E481) | 0.25% | 0.13% |
| Dipotassium phosphate (DKP) | 2.51% | 1.26% |
| Sodium hexametaphosphate (SHMP) | 0.64% | 0.32% |
| Water | 55.62% | 40.41% |
| | Total = 97% (3% moisture) | Total = 100 wt.% |

The creamer composition (including the water) would be spray dried to achieve a maximum moisture content of 3 wt.% during mass production (i.e. when produced on a commercial scale). However, the experiments in these examples were carried out using the creamer slurry emulsion (pre-drying) which has a target solids concentration of 50%. This does not impact the resulting stabilising effect of the amino acids.

Experiments were carried out with recipes which include 20 amino acid samples (i.e. 19 different amino acids, which include cystine HCl and cystine base) as direct replacements for, first DKP, and then SHMP (40 prototypes + references). All other ingredient quantities and ratios were kept the same throughout. Upon determination of the most successful buffering (DKP replacement) and chelating (SHMP replacement) amino acids, combinations were explored which replace both phosphates, once again keeping the overall ratio with the sodium caseinate constant. In these examples, cystine was used instead of cysteine due to commercial availability. However, cystine is simply the dimer of two cysteine molecules, and is representative of the effect of adding cysteine.

Wet particle size distribution analysis via light scattering was carried out using a Malvern Mastersizer 3000. The target is a monomodal fat droplet distribution of less than 1µm in size and comparable to the reference composition.

Measurement of % total solids is standard practice when prototyping creamers to ensure recipes have been made up correctly and that minimal evaporation has occurred during the heating part of the process. A CEM Smart System 5 Moisture/Solid Analyser was used, two readings were obtained, and an average was calculated for each sample.

Each creamer prototype was also made up as part of a typical 2-in-1 (creamer + coffee) recipe using Banbury hard water at ~14dH (German Degrees). The samples were then observed for visual signs of feathering thus indicating protein aggregation. Since the buffering capacity of the amino acids is also key, pH readings for both non-dairy creamer composition.

Informal sensory was also analysed, since it is known that amino acids have diverse flavour profiles, some which may be undesirable within the finished coffee drink (e.g., strong bitterness). Each prototype was compared to the reference composition for differences in flavour, specifically whether any off notes were detected.

The creamer industrial manufacturing process can be divided into two main parts: formation of a stable emulsion and formation of a powdered finished product. The emulsion is achieved through high shear mixing followed by two-stage homogenisation to ensure a uniform distribution of small (<1µm) fat droplets within the system. This slurry is then pasteurised before being atomised and dried to give a powder with a maximum moisture content of 3%.

For the purposes of these experiments, only slurries (i.e. liquid compositions) were prepared. However, these can be easily dried using the standard spray-drying techniques, or by agglomeration, which do not alter the properties of the composition.

The process of making the reference and experimental NDC compositions included the following steps:
(a) Water was heated in a thermomixer at 60 °C. This water was either the Banbury hard water, or the synthetically made hard water.
(b) Sodium caseinate and stabilisers (the DKP and/or SHMP and/or one or more amino acids) were added to the water, and the mixture was mixed for 5 minutes at a speed of 3-4 (approximately 500-1000 rpm) in a Thermomixer still.
(c) Coconut oil and emulsifiers were added, and the mixture was mixed for 5 minutes at speed of 3-4.
(d) Glucose syrup was added, and the mixture was mixed for 10 minutes at a speed of 4-5 (approximately 1000 to 2000 rpm).
(e) The composition was then mixed via high shear mixing at 7000 rpm for 3 minutes.
(f) The resulting sheared composition was homogenised by a two-stage homogenisation process at 200/50 bar.

After making the relevant reference and experimental compositions, the total solids content, pH and particle size distribution (PSD) were measured. The total solids content was measured using a CEM smart system 5 moisture/solid analyser, and the pH was measured using a Mettler Toledo pH probe. In addition, informal sensory analysis was performed on each experimental composition, and assessed in comparison to a reference composition. Coffee and boiling water were added in a typical 2-in-1 recipe to form the final beverage.

### Example 1 - DKP replacement (comparative example)

Twenty creamer samples were prepared, where all of the DKP of a reference composition was substituted for an amino acid. The other components (glucose syrup, coconut oil, sodium caseinate, E471, E481, SHMP and water content) were all kept substantially the same as the reference composition.

In particular, in each of these samples, the DKP is replaced with a different amino acid. The following amino acids were tested as replacements for DKP (E340): Alanine, Arginine, Aspartic Acid, Cystine Base, Cystine HCl, Glutamic Acid, Glycine, Histidine, Methionine, Phenylalanine, Proline, Serine, Tryptophan, Tyrosine, Isoleucine, Leucine, Lysine, Threonine, and Valine. The resulting sample creamer compositions had the following properties:

**Table 3**

| **Amino acid** | **% Solids** | **pH of creamer slurry at 25°C (± 1°C)** |
|---|---|---|
| Alanine | 48.92 | 6.51 |
| Arginine | 48.88 | 8.98 |
| Asparagine | 49.94 | 6.66 |
| Aspartic Acid | 54.18 | 3.76 - Did not homogenise due to protein aggregation in Thermomix. |
| Cystine Base | 49.05 | 6.69 |
| Cystine HCL | 43.95 | Could not read (sample not homogenous so solids and pH values not accurate). |
| Glutamic Acid | 38.11 | Could not read (sample not homogenous so solids and pH values not accurate). |
| Glycine | 47.46 | 6.57 |
| Histidine | 48.28 | 7.46 |
| Methionine | 47.53 | 6.02 |
| Phenylalanine | 47.52 | 6.68 |
| Proline | 47.16 | 6.56 |
| Serine | 48.64 | 6.49 |
| Tryptophan | 49.03 | 6.57 |
| Tyrosine | 46.54 | 6.73 |
| Isoleucine | 47.60 | 6.75 |
| Leucine | 48.36 | 6.65 |
| Lysine | 49.06 | 6.24 |
| Threonine | 48.80 | 6.52 |
| Valine | 47.97 | 6.66 |

These results show that Histidine gives a creamer pH closest to that of the reference. Acidic amino acids drop the pH too much and prohibit emulsion formation.

The creamer compositions were first sampled by participants and their sensory tasting notes were analysed. The creamer compositions were then added to coffee in a 2-in-1 composition The water used in the coffee samples was 14dH hard water. The resulting coffee beverages were tested to analyse whether any flocculation (and the degree of flocculation) occurred. The results are shown below in Table 4.

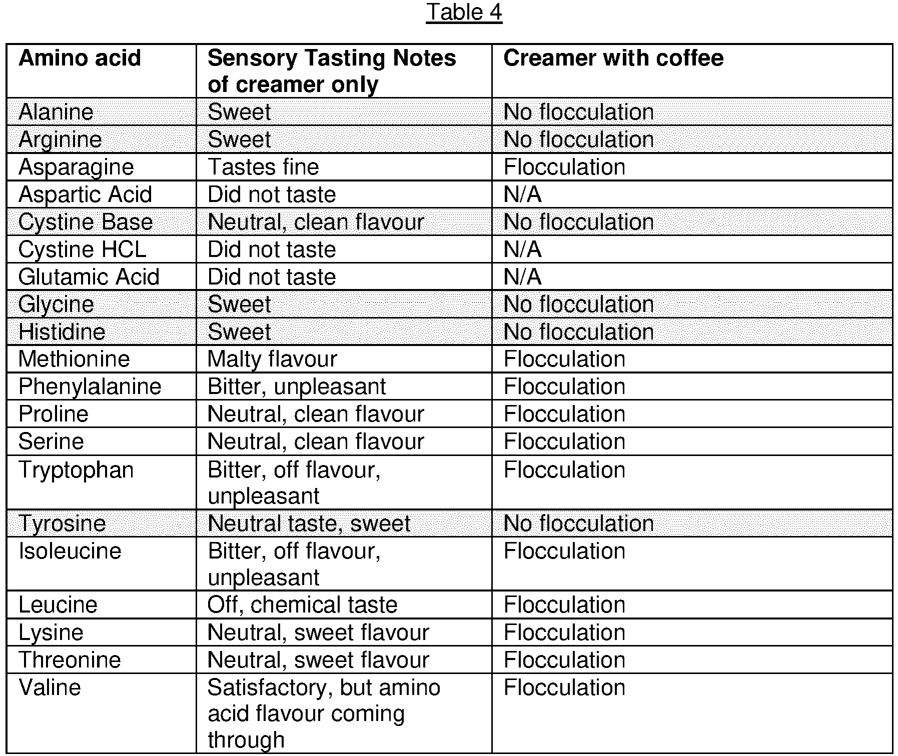

The results of these tests show that alanine, arginine, glycine, histidine, tyrosine, and cystine base were all suitable as replacements for DKP, because they all showed no flocculation upon addition of the creamer to the coffee solution. In addition, these all had a pleasant sweet or neutral taste. On the other hand, the remaining samples either showed flocculation, or were not tested (aspartic acid, cystine HCl and glutamic acid) because they did not form a stable emulsion.

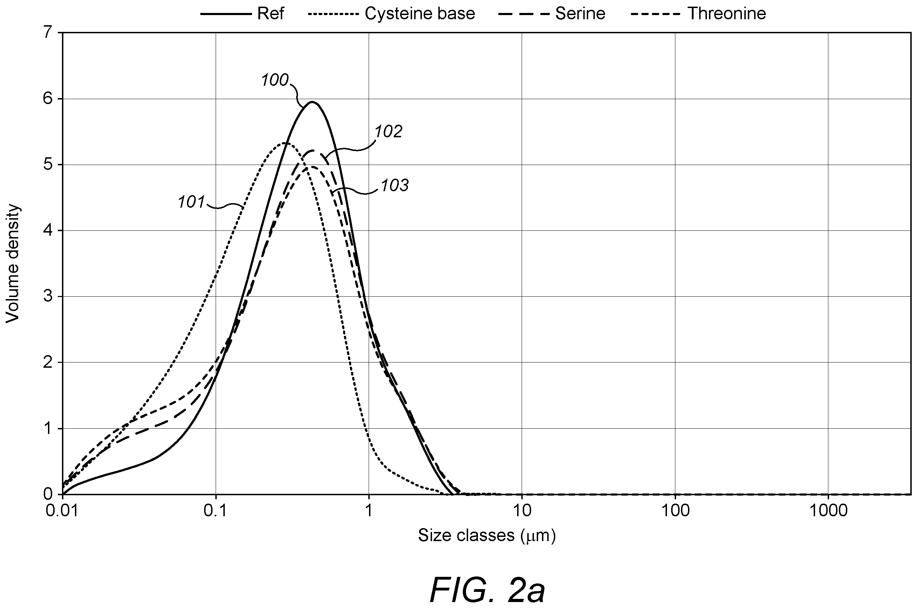

The particle size distribution was also determined for each of the twenty samples. The results of these tests are shown in the Figures 2a to 2e, which show the following.
- Figure 2a shows the PSD results of the polar amino acids, cystine base 101, serine 102, and threonine 103, in comparison to the reference 100.

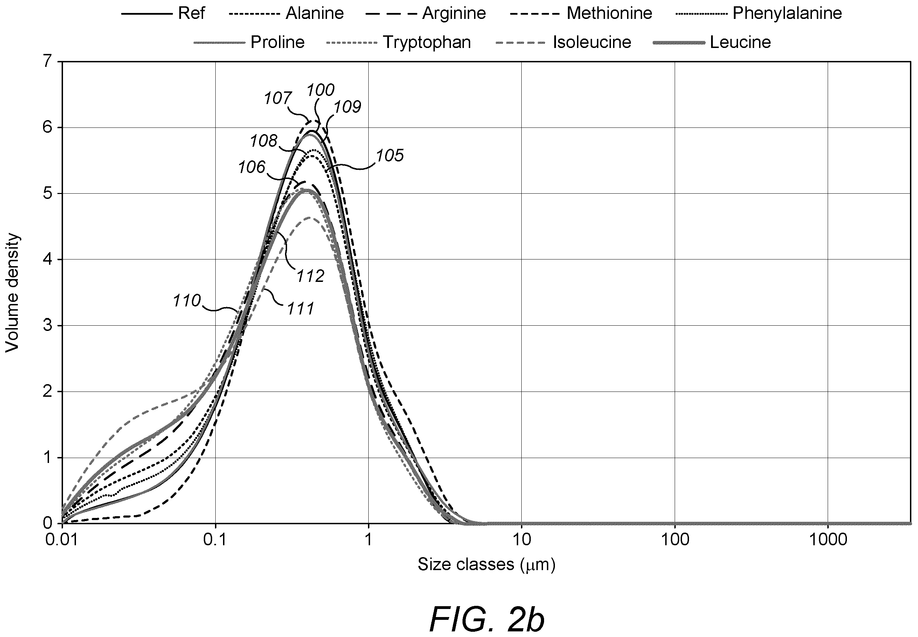

- Figure 2b shows the PSD results of the non-polar amino acids, alanine 105, arginine 106, methionine 107, phenylalanine 108, proline 109, tryptophan 110, Isoleucine 111, and leucine 112, in comparison to the reference 100.

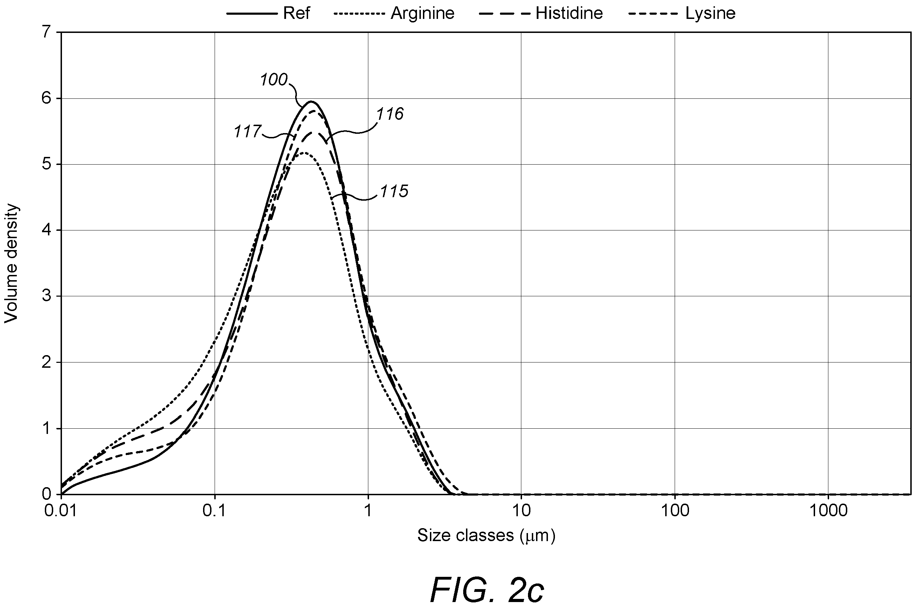

- Figure 2c shows the PSD results of the basic amino acids, arginine 115, histidine 116, and lysine 117, in comparison to the reference 100.

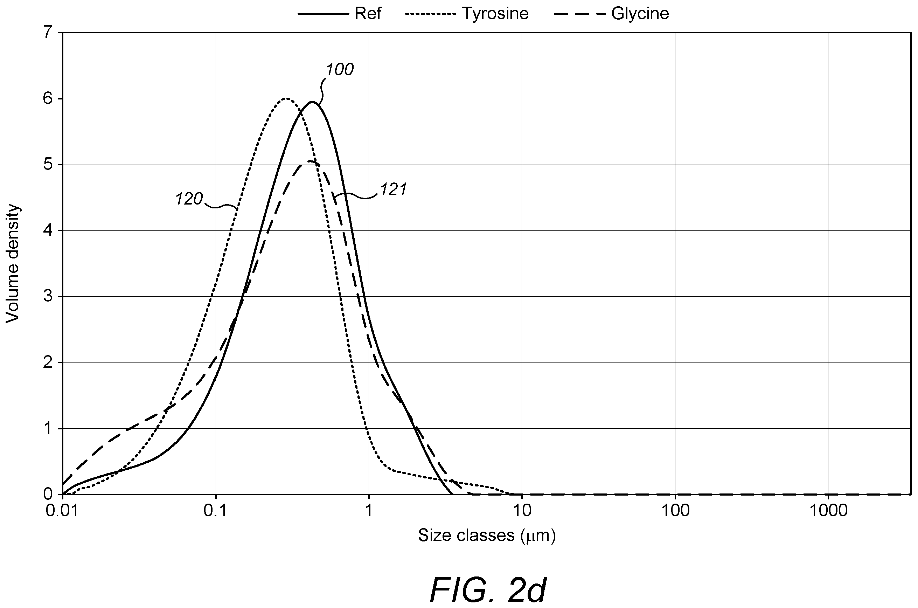

- Figure 2d shows the PSD results of the amino acids tyrosine 120, and glycine 121, in comparison to the reference 100.

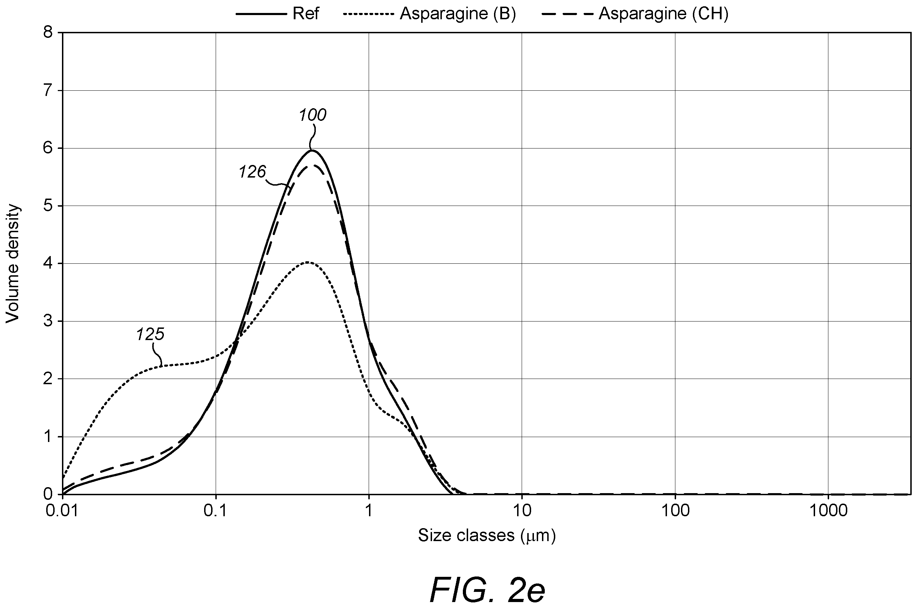

- Figure 2e shows the PSD results of the amino acid asparagine 125 as a replacement for DKP, in comparison to the reference 100

The figures show that all of the samples appear to have a similar emulsion stability to the reference, apart from cystine base and tyrosine, which appear to slightly improve emulsion stability.

From the results of these analyses (i.e. on the pH, solids content, taste, flocculation, and PSD), it was concluded that the following amino acids show the best properties as replacements for DKP: arginine, histidine, tyrosine, alanine, glycine, and cystine (base).

### Example 2 - SHMP replacement (comparative example)

Twenty creamer samples were prepared, where the SHMP of a reference creamer composition was replaced by a different amino acid sample.

In particular, in each of these samples, the SHMP of a reference creamer is replaced with a different amino acid. The following amino acids were tested as replacements for SHMP (E452): Alanine, Arginine, Aspartic Acid, Cystine Base, Cystine HCl, Glutamic Acid, Glycine, Histidine, Methionine, Phenylalanine, Proline, Serine, Tryptophan, Tyrosine, Isoleucine, Leucine, Lysine, Threonine, and Valine. The resulting sample creamer compositions had the following properties shown in Table 5.

**Table 5**

| **Amino acid** | **% Solids** | **pH of creamer at 25°C (± 1°C)** |
|---|---|---|
| Alanine | 48.34 | 7.79 |
| Arginine | 47.46 | 9.38 |
| Asparagine | 50.04 | 7.57 |
| Aspartic Acid | 48.18 | 6.45 |
| Cystine Base | 47.88 | 7.76 |
| Cystine HCL | 47.47 | 6.11 |
| Glutamic Acid | 47.98 | 6.54 |
| Glycine | 47.82 | 7.56 |
| Histidine | 46.54 | 7.87 |
| Methionine | 48.56 | 7.47 |
| Phenylalanine | 48.76 | 7.59 |
| Proline | 49.63 | 7.66 |
| Serine | 49.32 | 7.45 |
| Tryptophan | 48.57 | 7.73 |
| Tyrosine | 49.91 | 7.69 |
| Isoleucine | 48.25 | 7.65 |
| Leucine | 48.80 | 7.67 |
| Lysine | 48.52 | 7.67 |
| Threonine | 48.10 | 7.49 |
| Valine | 48.00 | 7.66 |

This data shows that at the levels used, most of the amino acids give a creamer pH similar to that of the reference creamer. This is primarily because the system is buffered with DKP, which prevents a drop in pH occurring when amino acids with a low pH are added (e.g. aspartic acid, glutamic acid, and cystine HCl).

The creamer compositions were first sampled by participants to evaluate their sensory tasting notes, and then the creamer compositions were added to coffee in a 2-in-1 amount. Hard water (14dH) was used to make the coffee. The resulting coffee beverages were tested to analyse whether any flocculation (and the degree of flocculation) occurred. The results are shown below in Table 6.

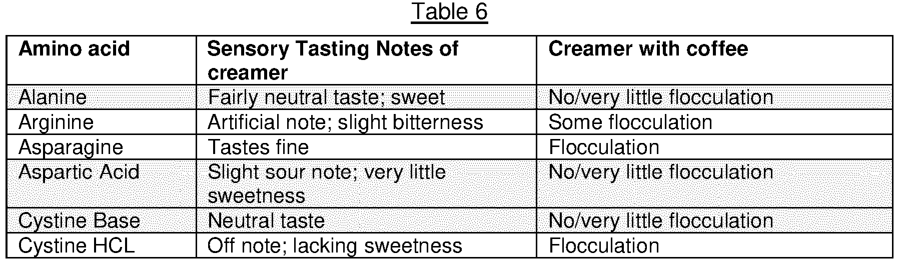

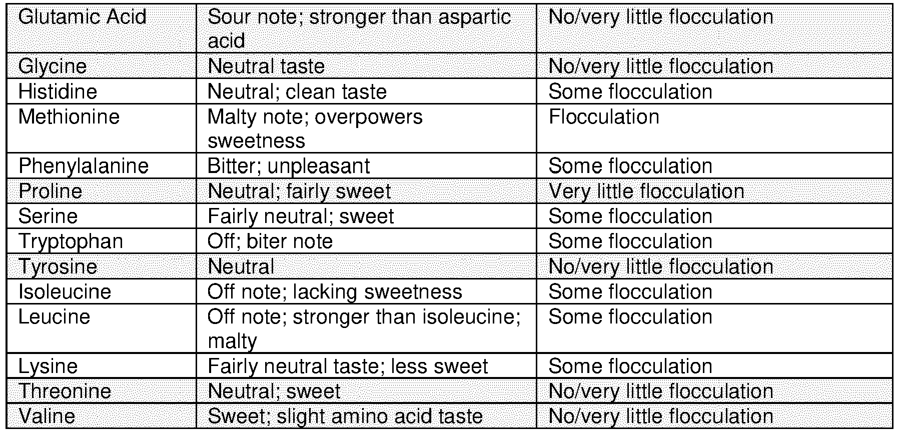

The results showed that aspartic acid, glutamic acid, cystine (base), threonine, tyrosine, alanine, glycine, proline, and valine are good options as replacements for SHMP as they all prevent flocculation in the resulting beverage, and have a neutral/sweet flavour or more generally a flavour that is acceptable for consumption.

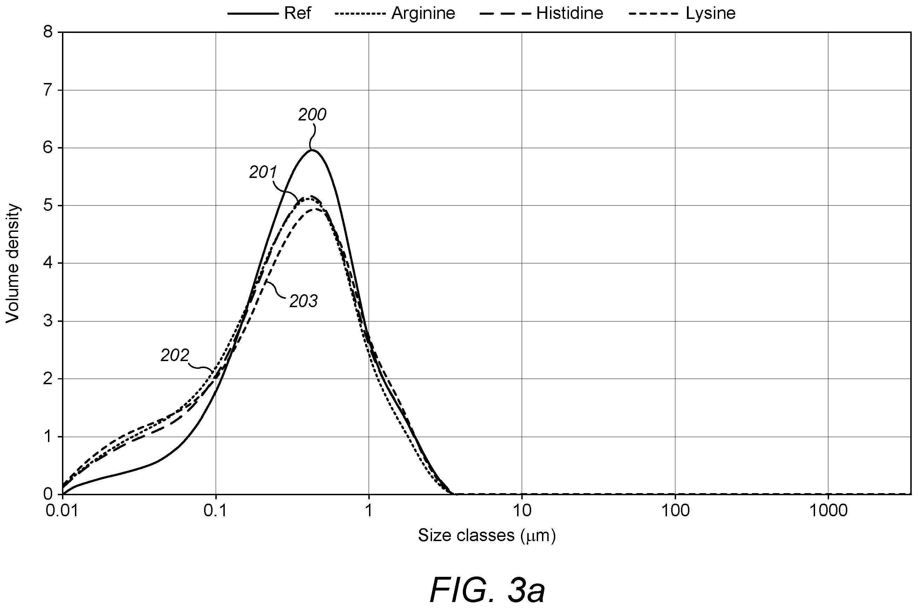

The particle size distribution (PSD) was also determined for each of the twenty samples (where each amino acid is acting as a replacement for SHMP). The results of these tests are shown in the Figures 3a to 3d, and 2e, which contain the following data:
- Figure 3a shows the PSD results of the samples where SHMP is substituted for basic amino acids, histidine 201, arginine 202, and lysine 203, in comparison to the reference 200.

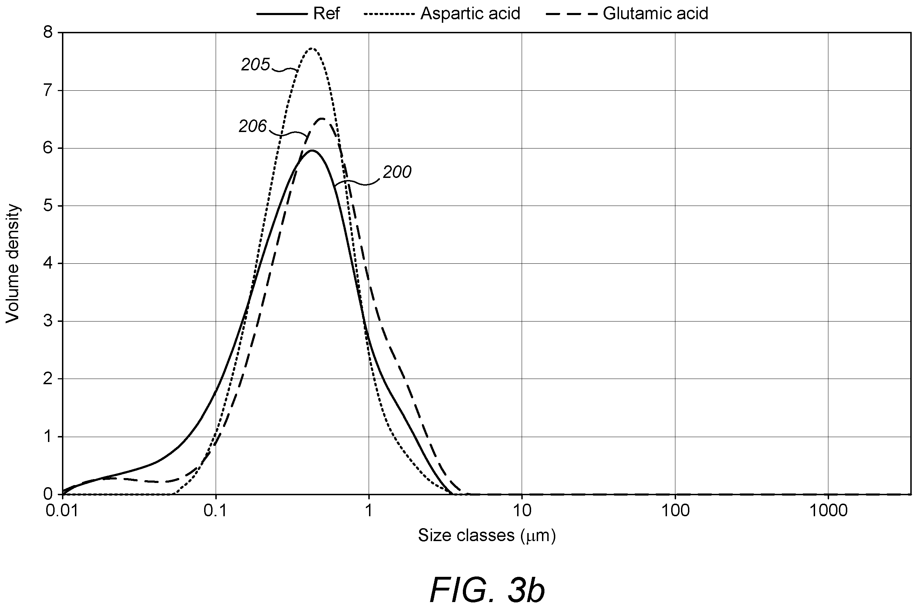

- Figure 3b shows the PSD results of the samples where SHMP is substituted for acidic amino acids, aspartic acid 205, and glutamic acid 206, in comparison to the reference 200.

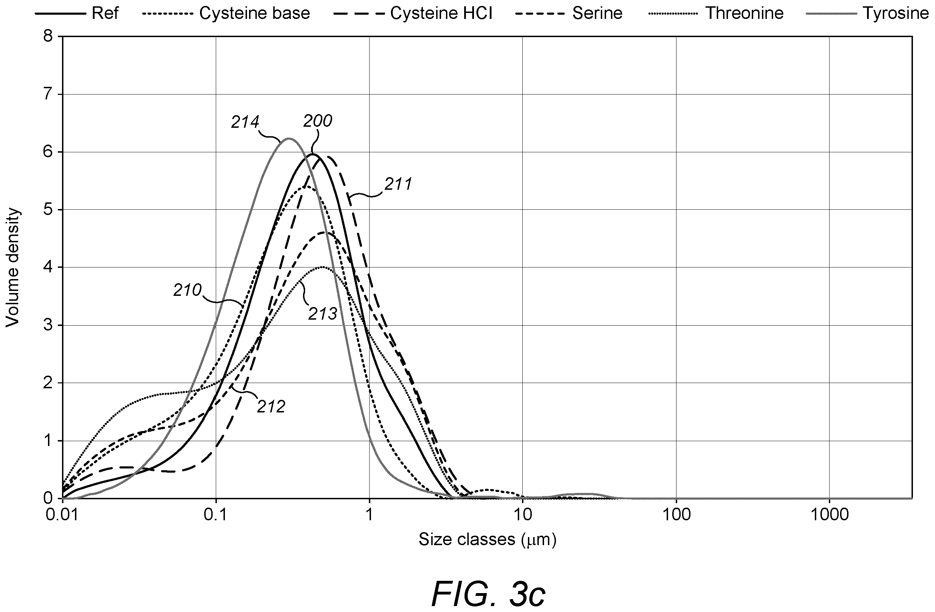

- Figure 3c shows the PSD results of the samples where SHMP is substituted for polar amino acids, cystine base 210, cystine HCL 211, Serine 212, Threonine, 213, and Tyrosine 214, in comparison to the reference 200.

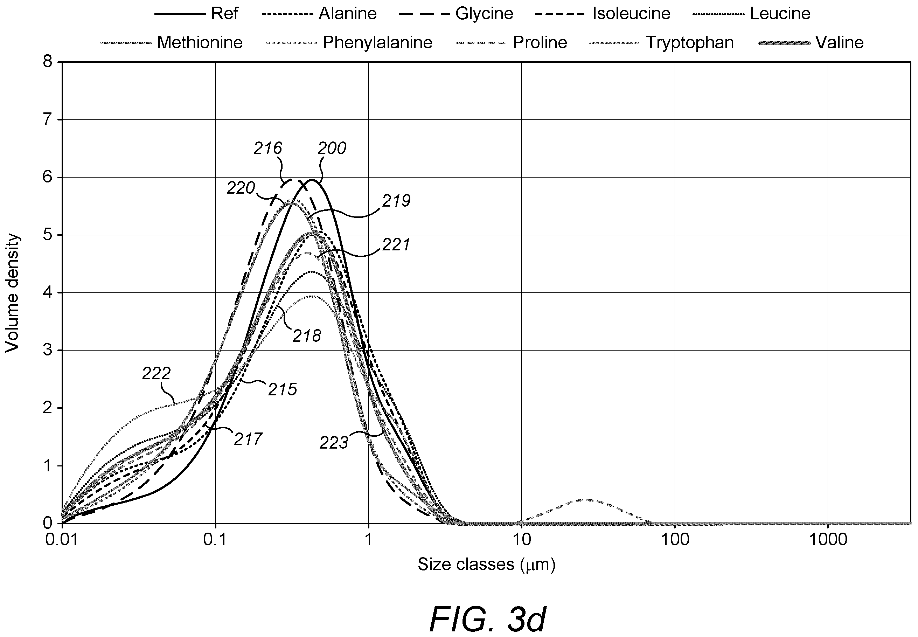

- Figure 3d shows the PSD results of the samples where SHMP is substituted for non-polar amino acids, alanine 215, glycine 216, isoleucine 217, leucine 218, methionine 219, phenylalanine 220, proline 221, tryptophan 222, and valine 223, in comparison to the reference 200.
- Figure 2e shows the PSD results of the amino acid asparagine 126 as a replacement for SHMP, in comparison to the reference 100.

The results show that aspartic acid gives a narrower PSD, indicating improved stability. Tyrosine, glycine, methionine, phenylalanine and cystine (base) also appear to give slight stability improvements.

From the results of these analyses (i.e. on the pH, solids content, taste, flocculation, and PSD), it was concluded that the following amino acids show the best properties as good replacements for SHMP in an NDC: aspartic acid, glutamic acid, cystine (base), threonine, tyrosine, alanine, glycine, proline, and valine.

### Example 3 - combination of buffering amino acid and chelating amino acid

From the results of examples 1, and 2, it was established that the following represent good DKP and SHMP replacements:
- Buffering (E340/DKP) replacement: (first amino acid) arginine, histidine, tyrosine, alanine, glycine, and cystine (base).
- Chelation (E452/SHMP) replacement: (second amino acid) aspartic acid, glutamic acid, cystine (base), threonine, tyrosine, alanine, glycine, proline, and valine.

In light of these findings, sample compositions were prepared to analyse the combination of various buffering and chelating amino acids as replacements for both DKP and SHMP. A total of 54 prototypes were made up, where the DKP and SHMP were substituted for different combinations of amino acids.

The following tests were then performed on said samples:
- Particle size distribution (PSD);
- Total solids content;
- pH;
- Hard water testing;
- Informal sensory on creamer; and
- Informal sensory on creamer + coffee.

### Example 3a - Histidine with each chelating agent

First, histidine as the buffering agent was tested with each chelating agent that was identified as being a viable SHMP replacement. The following results in Table 7 show the total solids content, pH, stability (flocculation degree), and sensory tasting notes of both creamer, and creamer + coffee, for all of these samples.

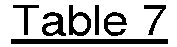

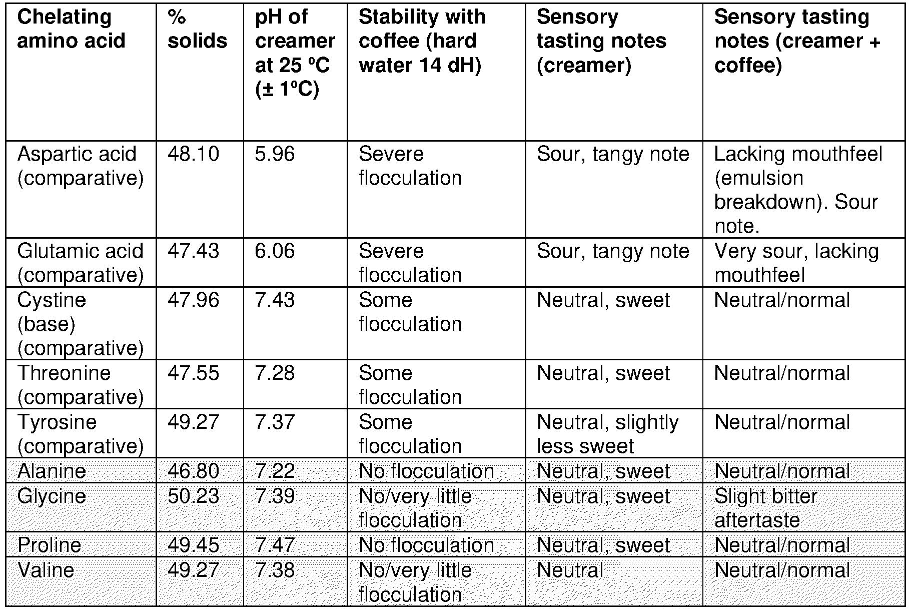

This data shows that histidine with alanine or proline gives the best in-cup stability. However, glycine and valine are also satisfactory, with very little flocculation and acceptable flavours. The acidic amino acids drop the pH too much, leading to instability and a sour taste.

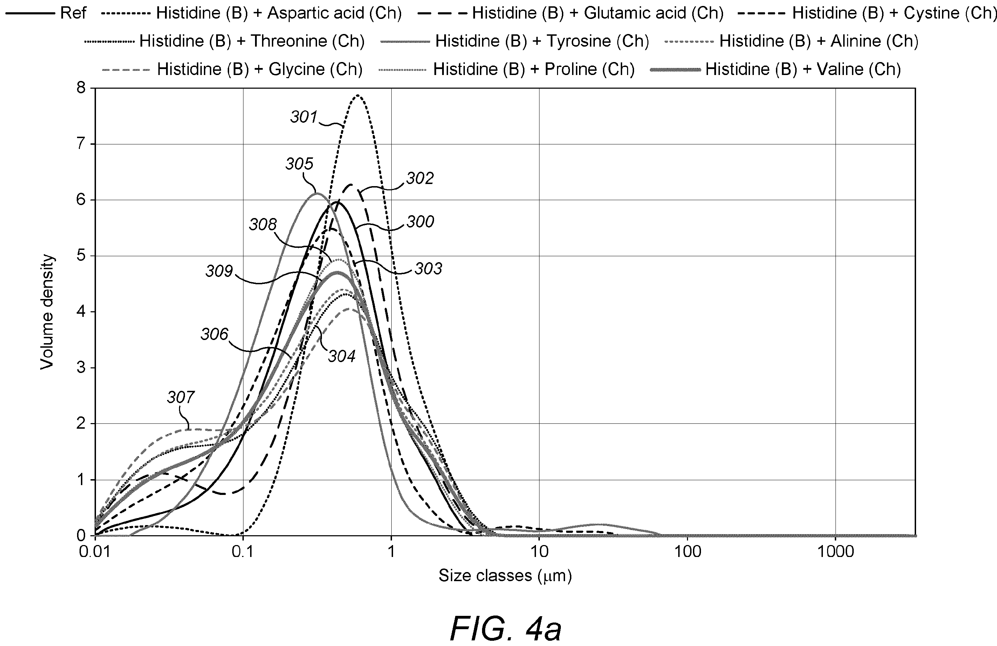

The PSD of these combinations is also shown in Figure 4a. This graph shows the combinations of:
- Histidine and aspartic acid 301;
- Histidine and glutamic acid 302;
- Histidine and cystine 303;
- Histidine and threonine 304;
- Histidine tyrosine 305;
- Histidine and alanine 306;
- Histidine and glycine 307;
- Histidine and proline 308; and
- Histidine and valine 309.

The reference composition 300 is also shown. The results show that most of these combinations had a PSD similar to that of the reference composition, except the combination of histidine and aspartic acid, which showed a higher particle size and less stability.

### Example 3b - Alanine with each chelating agent

Alanine as the buffering agent was tested with each chelating agent that was identified as being a good SHMP replacement. The results shown in Table 8 were obtained.

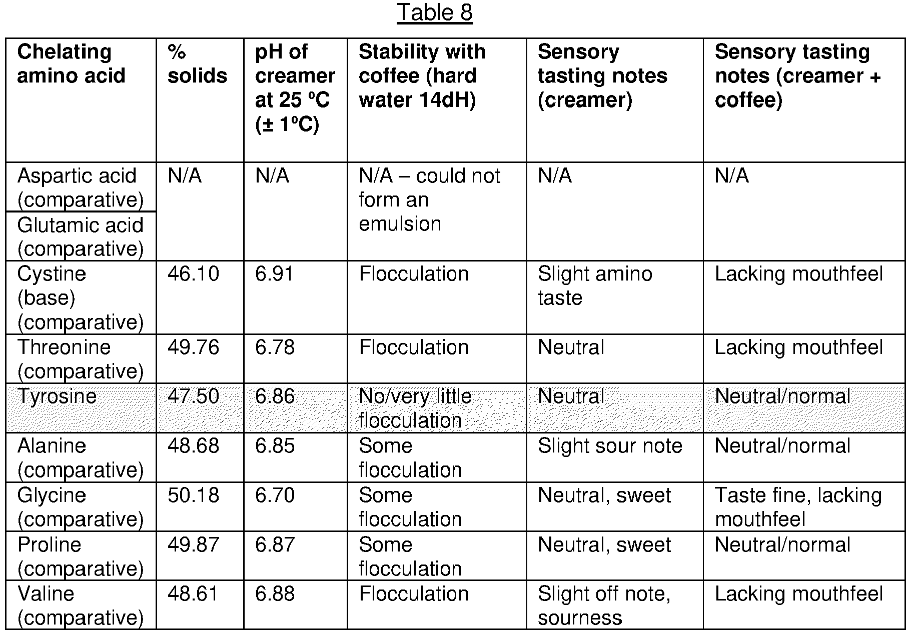

The results show that the combination of alanine and tyrosine provides the best in-cup stability. The acidic amino acids drop the pH too much, resulting in protein aggregation in the thermomixer.

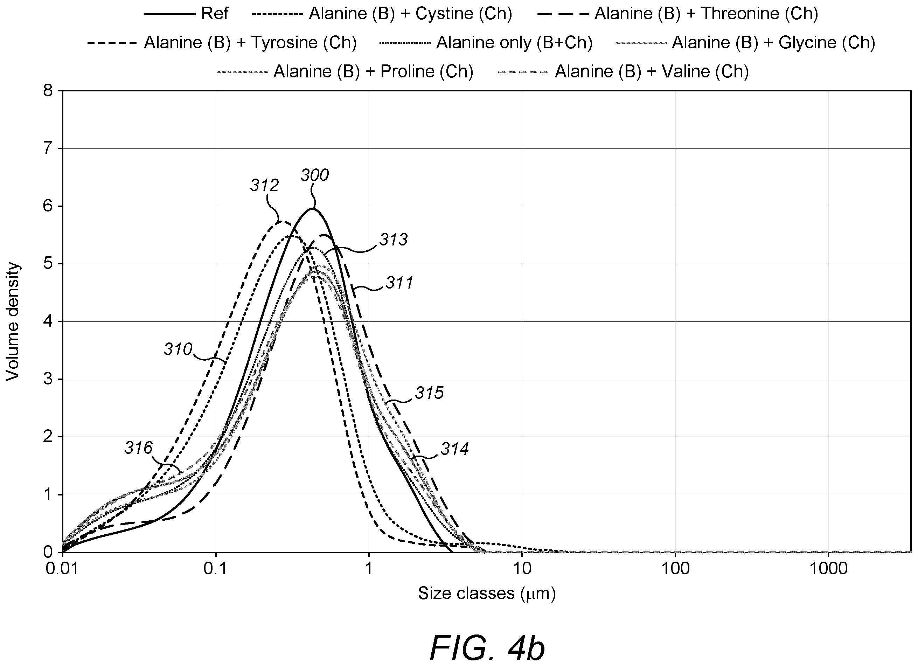

The PSD of these combinations is also shown in Figure 4b. This graph shows the combinations of:
- Alanine + cystine (base) 310;
- Alanine + threonine 311;
- Alanine + tyrosine 312;
- Alanine only (as buffer and chelating agent) 313;
- Alanine + glycine 314;
- Alanine + proline 315; and
- Alanine + valine 316.

The reference composition 300 is also shown. This data shows that most combinations had a PSD similar to that of the reference composition. The combinations of alanine with cystine, and tyrosine, showed slightly higher stability than the reference, which shows that the compositions are at least as stable as the reference composition.

### Example 3c - Glycine with each chelating agent (comparative)

Glycine as the buffering agent was tested with each chelating agent that was identified as being a good SHMP replacement. The results shown in Table 9 were obtained.

**Table 9**

| **Chelating amino acid** | **% solids** | **pH of creamer at 25 °C (± 1°C)** | **Stability with coffee (hard water 14dH)** | **Sensory tasting notes (creamer)** | **Sensory tasting notes (creamer + coffee)** |
|---|---|---|---|---|---|
| Aspartic acid | N/A | N/A | N/A - could not form an emulsion | N/A | N/A |
| Glutamic acid | | | | | |
| Cystine (base) | 49.83 | 6.69 | Some flocculation | Neutral, sweet | Taste fine, lacking mouthfeel |
| Threonine | 48.99 | 6.63 | Severe flocculation | Neutral, sweet | Lacking mouthfeel |
| Tyrosine | 50.08 | 6.74 | Flocculation | Neutral, sweet | Taste fine, lacking mouthfeel |
| Alanine | 50.09 | 6.72 | Severe flocculation | Slight sour note, less sweet | Taste fine, lacking mouthfeel |
| Glycine | 49.86 | 6.67 | Severe flocculation | Neutral, slight tangy note | Taste fine, lacking mouthfeel |
| Proline | 48.41 | 6.73 | Severe flocculation | Neutral | Taste fine, lacking mouthfeel |
| Valine | 50.98 | 6.72 | Severe flocculation | Slight sourness | Off, sour note |

The results show that none of the chelating amino acids in combination with glycine give particularly good in-cup stability, as they result in flocculation to some degree, with mixed flavours, but generally lacking mouthfeel. These compositions may act as alternatives to present stabilising systems for NDCs, but do not represent the most advantageous compositions. The acidic amino acids drop the pH too much, causing aggregation to occur in the thermomixer.

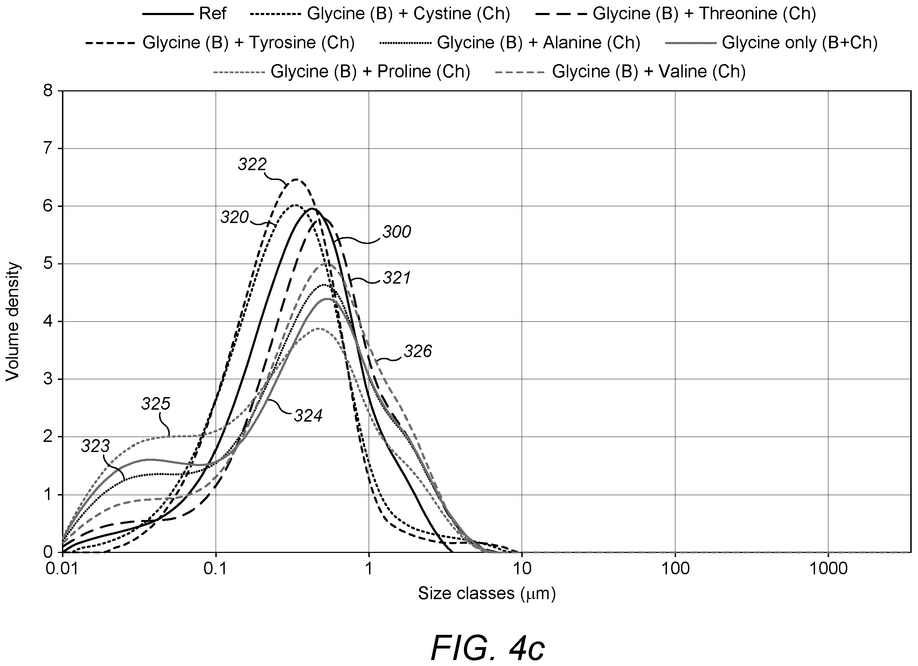

The PSD of these combinations is also shown in Figure 4c. This graph shows the combinations of:
- Glycine + cystine (base) 320;
- Glycine + threonine 321;
- Glycine + tyrosine 322;
- Glycine + alanine 323;
- Glycine only (as buffer and chelator) 324;
- Glycine + proline 325; and
- Glycine + valine 326.

The reference composition 300 is also shown. The data shows that these combinations had PSDs similar to that of the reference composition. However, glycine with cystine and tyrosine both showed slight improvements in stability.

### Example 3d - Cystine (base) with each chelating agent

Cystine (base) as the buffering agent was tested with each chelation agent that was identified as being a good SHMP replacement. The results shown in Table 10 were obtained.

**Table 10**

| **Chelating amino acid** | **% solids** | **pH of creamer at 25 °C (± 1°C)** | **Stability with coffee (hard water 14dH)** | **Sensory tasting notes (creamer)** | **Sensory tasting notes (creamer + coffee)** |
|---|---|---|---|---|---|
| Aspartic acid (comparative) | 48.70 | 3.59 | Severe flocculation | Very sour | No mouthfeel, sourness masked |
| Glutamic acid (comparative) | N/A | N/A | N/A - could not form an emulsion | N/A | N/A |
| Cystine (base) (comparative) | 51.89 | 6.55 | No flocculation, scum on cooling | Neutral, sweet | Tastes fine |
| Threonine | 49.35 | 6.64 | No flocculation, scum on cooling | Neutral | Tastes fine |
| Tyrosine | 51.04 | 6.79 | No flocculation, scum on cooling | Neutral | Tastes fine, slightly less sweet |
| Alanine (comparative) | 50.52 | 6.69 | Scum on surface | Neutral, sweet | Tastes fine |
| Glycine (comparative) | 49.43 | 6.68 | Flocculation | Neutral, sweet | Lacking mouthfeel |
| Proline (comparative) | 49.51 | 6.80 | Flocculation | Neutral, sweet | Lacking mouthfeel |
| Valine (comparative) | 49.41 | 6.92 | Flocculation | Slightly malty taste, less sweet | Lacking mouthfeel, slight metallic taste |

This data shows that some of these samples were acceptable alternative stabilising systems for NDCs, while some showed too much flocculation and so were less suitable.

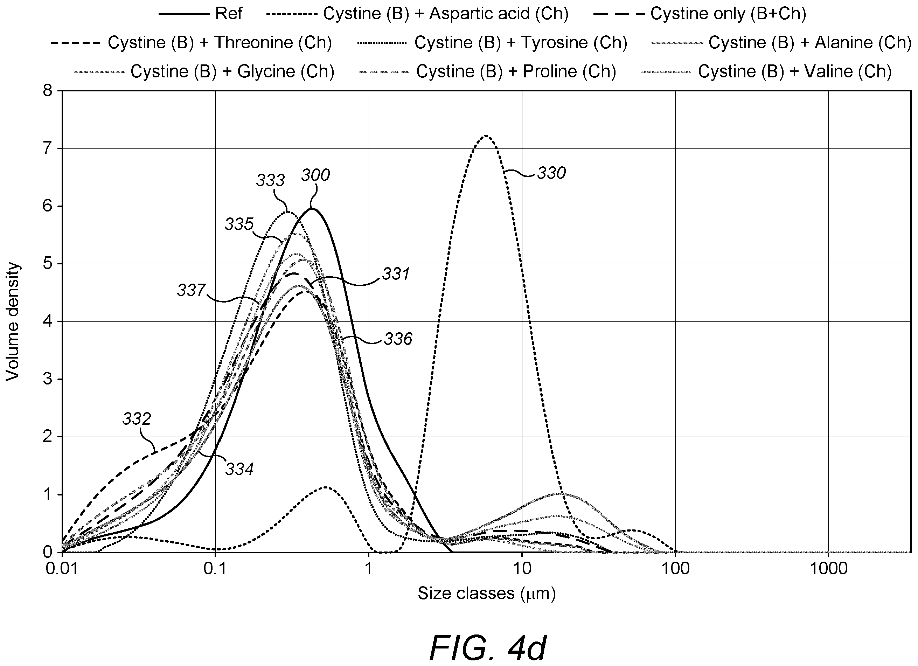

The PSD of these combinations is also shown in Figure 4d. This graph shows the combinations of:
- Cystine + aspartic acid 330;
- Cystine only (as buffer + chelator) 331;
- Cystine + threonine 332;
- Cystine + tyrosine 333;
- Cystine + alanine 334;
- Cystine + glycine 335;
- Cystine + proline 336; and
- Cystine + valine 337.

The reference composition 300 is also shown. Figure 4d shows that all of the combinations of cystine (base) with one of the selected chelating agents have a PSD close to that of the reference sample, except for cystine with aspartic acid, which has a high average particle size and is therefore unsuitable as a stabilising system in a creamer composition. The remaining compositions show acceptable PSDs.

### Example 3e - Arginine with each chelating agent

Arginine as the buffering agent was tested with each chelation agent that was identified as being a god SHMP replacement. The results shown in Table 11 were obtained.

**Table 11**

| **Chelating amino acid** | **% solids** | **pH of creamer at 25 °C (± 1°C)** | **Stability with coffee (hard water 14dH)** | **Sensory tasting notes (creamer)** | **Sensory tasting notes (creamer + coffee)** |
|---|---|---|---|---|---|
| Aspartic acid (comparative) | 50.83 | 7.88 | No flocculation, scum on cooling | Slight sourness | Slight bitter aftertaste |
| Glutamic acid (comparative) | 48.91 | 7.97 | Some flocculation | Sour taste | Bitter, unpleasant |
| Cystine (base) (comparative) | 49.71 | 8.52 | Some flocculation | Slight amino taste | Tastes fine, lacks sweetness, watery |
| Threonine (comparative) | 49.76 | 8.42 | Some flocculation | Less sweet, slight off note | Smoky taste, watery |
| Tyrosine (comparative) | 49.71 | 8.9 | Flocculation, scum | Slight bitter aftertaste | Tastes fine, lacks sweetness, watery |
| Alanine (comparative) | 49.28 | 9.02 | Some small flocculation | Amino, fishy taste | Slightly metallic |
| Glycine | 47.85 | 8.87 | No flocculation, but scum on cooling | Neutral, sweet | Tastes fine |
| Proline (comparative) | 49.32 | 9.39 | Some small flocculation | Off, chemical taste | Chemical, off taste |
| Valine (comparative) | 49.49 | 9.17 | Some small flocculation | Off taste, bitterness | Watery, slightly metallic |

The results show that some flocculation occurred on many of the samples, and that some had no flocculation, but a skin (i.e. scum) formed upon cooling of the sample. Although all of the samples represented potential alternative creamer compositions, none were considered to be an optimum stabilising system for an NDC with the most desirable properties.

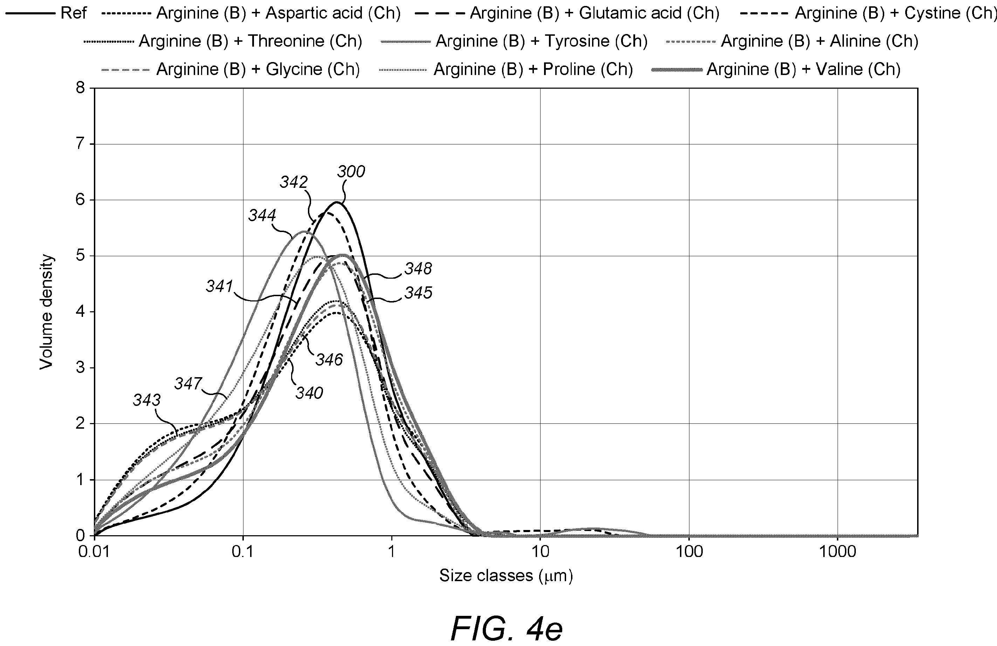

The PSD of these combinations is also shown in Figure 4e. This graph shows the combinations of:
- Arginine + aspartic acid 340;
- Arginine + glutamic acid 341;
- Arginine + cystine 342;
- Arginine + threonine 343;
- Arginine + tyrosine 344;
- Arginine + alanine 345;
- Arginine + glycine 346;
- Arginine + proline 347; and
- Arginine + valine 348.

The reference composition 300 is also shown. The data shows that these combinations had acceptable PSDs, similar to that of the reference creamer composition. The combinations with a wider distribution (i.e. demonstrating broad particle sizes) leaves the emulsion slightly more prone to destabilisation and Ostwald ripening, and so are less desirable. In addition, the arginine and tyrosine combination showed good stability.

### Example 3f - Tyrosine with each chelating agent (comparative)

Tyrosine as the buffering agent was tested with each chelating agent that was identified as being a good SHMP replacement. The results shown in Table 12 were obtained.

**Table 12**

| **Chelating amino acid** | **% solids** | **pH of creamer at 25 °C (± 1°C)** | **Stability with coffee (hard water 14dH)** | **Sensory tasting notes (creamer)** | **Sensory tasting notes (creamer + coffee)** |
|---|---|---|---|---|---|
| Aspartic acid | 46.83 | 3.80 | Severe flocculation | Very sour, thick texture | Unpleasant, bitter, no mouthfeel. |
| Glutamic acid | N/A | N/A | Could not form an emulsion | N/A | N/A |
| Cystine (base) | 51.14 | 7.15 | Some flocculation | Neutral | Tastes fine |
| Threonine | 50.68 | 6.97 | Some flocculation | Neutral, sweet | Tastes fine |
| Tyrosine | 48.20 | 7.29 | Flocculation, scum | Neutral, sweet | Tastes fine |
| Alanine | 49.29 | 7.08 | Flocculation | Slight amino taste, less sweet | Tastes fine |
| Glycine | 49.15 | 6.92 | Flocculation | Neutral, sweet | Tastes fine |
| Proline | 51.20 | 7.32 | Flocculation | Neutral | Tastes fine |
| Valine | 49.08 | 7.12 | Flocculation | Slight chemical taste, bitterness | Tastes fine |

The results show that none of the chelating amino acids in combination with tyrosine give a good in-cup stability. The pH generally decreases on addition of coffee/water (except for aspartic acid) leading to issues with flocculation. Thus, tyrosine as a buffer with amino acid chelating agents does not provide improved stabilising systems for NDCs, and simply offers an alternative.

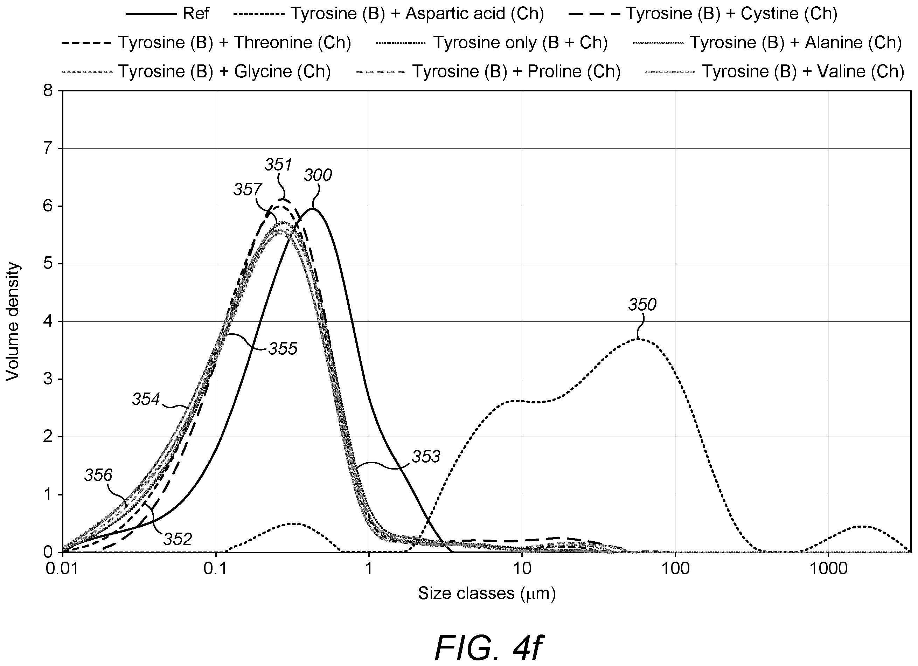

The PSD of these combinations is also shown in Figure 4f. This graph shows the combinations of:
- Tyrosine + aspartic acid 350;
- Tyrosine + cystine 351;
- Tyrosine + threonine 352;
- Tyrosine only (as buffer and chelating agent) 353;
- Tyrosine + alanine 354;
- Tyrosine + glycine 355;
- Tyrosine + proline 356;
- Tyrosine + valine 357.

The reference composition 300 is also shown. The data shows that all of the compositions, except for tyrosine with aspartic acid, showed PSDs similar to that of the reference sample. Tyrosine with aspartic acid showed a broad distribution and a large particle size.

### Summary of results from examples 3a to 3f

From the tests carried out on the combinations of the good amino acid buffers with the good amino acid chelating agents, it was surprisingly found that the most advantageous combinations were:
- Histidine (buffer) + alanine (chelating agent);
- Histidine (buffer) + glycine (chelating agent);
- Histidine (buffer) + proline (chelating agent);
- Histidine (buffer) + valine (chelating agent);
- Alanine (buffer) + tyrosine (chelating agent);
- Cystine base only (as buffer and chelating agent);
- Cystine base (buffer) + threonine (chelating agent);
- Cystine base (buffer) + tyrosine (chelating agent);
- Arginine (buffer) + aspartic acid (chelating agent); and
- Arginine (buffer) + glycine (chelating agent).

These combinations of amino acids were found to provide the best in-cup stability, including providing the creamer with good emulsion properties, preventing flocculation, buffering against pH changes, and also having a desirable taste/flavour (i.e. sensory notes).

Although the combinations of the chosen buffering amino acids (arginine, histidine, tyrosine, alanine, glycine, and cystine (base)) with the chosen chelating amino acids (cystine (base), threonine, tyrosine, alanine, glycine, proline, and valine) provide satisfactory alternative stabilising compositions for use in a non-dairy creamer compositions, the specific combinations identified above were unexpectedly found to provide the most advantageous stabilising systems. These have the best in-cup stability with the best sensory results, making them advantageous for use in an NDC used with coffee beverages, and providing said NDC with a 'clean label'. In addition, all of these combinations gave good PSD results that were close to the reference composition.

As used herein, the singular form of "a", "an" and "the" include plural references unless the context clearly dictates otherwise. The use of the term "comprising" is intended to be interpreted as including such features but not excluding other features and is also intended to include the option of the features necessarily being limited to those described. In other words, the term also includes the limitations of "consisting essentially of" (intended to mean that specific further components can be present provided they do not materially affect the essential characteristic of the described feature) and "consisting of" (intended to mean that no other feature may be included such that if the components were expressed as percentages by their proportions, these would add up to 100%, whilst accounting for any unavoidable impurities), unless the context clearly dictates otherwise. Percentages are by weight, in particular, by dry weight of the composition, unless indicated to the contrary.

## Claims

1. A non-dairy creamer composition for use in a beverage, wherein the composition comprises:
(a) from 1 to 6 wt.% of two or more naturally-occurring amino acids;
(b) from 0.5 to 4 wt.% sodium caseinate;
wherein the wt.% is based on the total dry weight of the composition,
wherein the two or more naturally-occurring amino acids comprise:
(A) 0.5 to 3.5 wt.% based on the total weight of the dried composition of a first amino acid; and
(B) 0.5 to 2.5 wt.% based on the total weight of the dried composition of a second amino acid,
wherein:
(i) the first amino acid is histidine, and the second amino acid is alanine, glycine, proline, or valine; or
(ii) the first amino acid is alanine, and the second amino acid is tyrosine; or
(iii) the first amino acid is cysteine, and the second amino acid is threonine or tyrosine; or
(iv) the first amino acid is arginine, and the second amino acid is glycine.

2. A non-dairy creamer composition according to claim 1, wherein the composition comprises from 30 to 70 wt.% of one or more sugars and/or sweeteners.

3. A non-dairy cream composition according to claim 2, wherein the one or more sugars comprises glucose syrup.

4. A non-dairy creamer composition according to any preceding claim, wherein the composition comprises from 25 to 60 wt.% of a non-dairy fat.

5. A non-dairy creamer composition according to claim 4, wherein the non-dairy fat is coconut oil.

6. A non-dairy creamer composition according to any preceding claim, wherein the composition comprises 0.2 to 2 wt.% of mono- or di-glycerides of fatty acids.

7. A non-dairy creamer composition according to any preceding claim, wherein the composition comprises 0.05 to 1 wt.% of sodium stearoyl lactylate.

8. A non-dairy creamer composition according to any preceding claim, wherein the composition is substantially free from phosphates, and preferably is substantially free from any further stabilisers, chelating agents and buffering agents in addition to the amino acids and any sodium stearoyl lactylate.

9. A non-dairy creamer composition according to any preceding claim, wherein the creamer composition is a spray-dried powder, or is a liquid creamer composition.

10. A non-dairy creamer composition according to any preceding claim, wherein the composition is free from aspartic acid and glutamic acid.

11. A kit comprising:
(a) one or more beverage ingredients; and
(b) the non-dairy creamer composition of any of claims 1 to 10.

12. A method of providing a beverage comprising mixing the creamer composition of any of claims 1 to 10, or the kit of claim 11, with water.

## Patentansprüche

1. Milchfreie Kaffeeweißerzusammensetzung für eine Verwendung in einem Getränk, wobei die Zusammensetzung umfasst:
(a) zu 1 bis 6 Gew.-% zwei oder mehr natürlich vorkommende Aminosäuren;
(b) zu 0,5 bis 4 Gew.-% Natriumkaseinat;
wobei sich die Gewichtsprozente auf das Gesamttrockengewicht der Zusammensetzung beziehen,
wobei die zwei oder mehr natürlich vorkommenden Aminosäuren umfassen:
(A) zu 0,5 bis 3,5 Gew.-%, bezogen auf das Gesamtgewicht der getrockneten Zusammensetzung, eine erste Aminosäure; und
(B) zu 0,5 bis 2,5 Gew.-%, bezogen auf das Gesamtgewicht der getrockneten Zusammensetzung, eine zweite Aminosäure,
wobei:
(i) die erste Aminosäure Histidin ist und die zweite Aminosäure Alanin, Glycin, Prolin oder Valin ist; oder
(ii) die erste Aminosäure Alanin ist und die zweite Aminosäure Tyrosin ist; oder
(iii) die erste Aminosäure Cystein ist und die zweite Aminosäure Threonin oder Tyrosin ist; oder
(iv) die erste Aminosäure Arginin ist und die zweite Aminosäure Glycin ist.

2. Milchfreie Kaffeeweißerzusammensetzung nach Anspruch 1, wobei die Zusammensetzung von zu 30 bis 70 Gew.-% einen oder mehrere Zucker und/oder Süßstoffe umfasst.

3. Milchfreie Kaffeeweißerzusammensetzung nach Anspruch 2, wobei der eine oder die mehreren Zucker Glukosesirup umfassen.

4. Milchfreie Kaffeeweißerzusammensetzung nach einem der vorstehenden Ansprüche, wobei die Zusammensetzung von zu 25 bis 60 Gew.-% ein milchfreies Fett umfasst.

5. Milchfreie Kaffeeweißerzusammensetzung nach Anspruch 4, wobei das milchfreie Fett Kokosnussöl ist.

6. Milchfreie Kaffeeweißerzusammensetzung nach einem der vorstehenden Ansprüche, wobei die Zusammensetzung zu 0,2 bis 2 Gew.-% Mono- oder Diglyceride von Fettsäuren umfasst.

7. Milchfreie Kaffeeweißerzusammensetzung nach einem der vorstehenden Ansprüche, wobei die Zusammensetzung zu 0,05 bis 1 Gew.-% Natriumstearoyllactylat umfasst.

8. Milchfreie Kaffeeweißerzusammensetzung nach einem der vorstehenden Ansprüche, wobei die Zusammensetzung im Wesentlichen frei von Phosphaten ist und vorzugsweise im Wesentlichen frei von beliebigen weiteren Stabilisatoren, Chelatbildnern und Puffermitteln zusätzlich zu den Aminosäuren und beliebigem Natriumstearoyllactylat ist.

9. Milchfreie Kaffeeweißerzusammensetzung nach einem der vorstehenden Ansprüche, wobei die Kaffeeweißerzusammensetzung ein sprühgetrocknetes Pulver oder eine flüssige Kaffeeweißerzusammensetzung ist.

10. Milchfreie Kaffeeweißerzusammensetzung nach einem der vorstehenden Ansprüche, wobei die Zusammensetzung frei von Asparaginsäure und Glutaminsäure ist.

11. Kit, umfassend:
(a) eine oder mehrere Getränkezutaten; und
(b) die milchfreie Kaffeeweißerzusammensetzung nach einem der Ansprüche 1 bis 10.

12. Verfahren zum Bereitstellen eines Getränks, umfassend das Mischen der Kaffeeweißerzusammensetzung nach einem der Ansprüche 1 bis 10 oder des Kits nach Anspruch 11 mit Wasser.

## Revendications

1. Composition de colorant à café non laitier pour utilisation dans une boisson, dans laquelle la composition comprend :
(a) de 1 à 6 % en poids de deux ou plusieurs acides aminés d'origine naturelle ;
(b) de 0,5 à 4 % en poids de caséinate de sodium ;
dans laquelle le pourcentage en poids est basé sur le poids sec total de la composition,
dans laquelle les deux acides aminés ou plus d'origine naturelle comprennent :
(A) 0,5 à 3,5 % en poids sur la base du poids total de la composition séchée d'un premier acide aminé ; et
(B) 0,5 à 2,5 % en poids sur la base du poids total de la composition séchée d'un second acide aminé,
dans laquelle :
(i) le premier acide aminé est de l'histidine et le second acide aminé est de l'alanine, de la glycine, de la proline ou de la valine ; ou
(ii) le premier acide aminé est de l'alanine et le second acide aminé est de la tyrosine ; ou
(iii) le premier acide aminé est de la cystéine et le second acide aminé est de la thréonine ou de la tyrosine ; ou
(iv) le premier acide aminé est de l'arginine et le second acide aminé est de glycine.

2. Composition de colorant à café non laitier selon la revendication 1, dans laquelle la composition comprend de 30 à 70 % en poids d'un ou plusieurs sucres et/ou édulcorants.

3. Composition de colorant à café non laitier selon la revendication 2, dans laquelle le ou les sucres comprennent le sirop de glucose.

4. Composition de colorant à café non laitier selon l'une quelconque des revendications précédentes, dans laquelle la composition comprend de 25 à 60 % en poids d'une matière grasse non laitière.

5. Composition de colorant à café non laitier selon la revendication 4, dans laquelle la matière grasse non laitière est de l'huile de coco.

6. Composition de colorant à café non laitier selon l'une quelconque revendication précédente, dans laquelle la composition comprend de 0,2 à 2 % en poids de mono- ou di-glycérides d'acides gras.

7. Composition de colorant à café non laitier selon l'une quelconque revendication précédente, dans laquelle la composition comprend de 0,05 à 1 % en poids de stéaroyl-lactylate de sodium.

8. Composition de colorant à café non laitier selon l'une quelconque revendication précédente, dans laquelle la composition est essentiellement exempte de phosphates et, de préférence, est essentiellement exempte de stabilisants, d'agents chélateurs et d'agents tampons en plus des acides aminés et du stéaroyl-lactylate de sodium.

9. Composition de colorant à café non laitier selon l'une quelconque revendication précédente, dans laquelle la composition de colorant à café est une poudre séchée par pulvérisation ou une composition de colorant à café liquide.

10. Composition de colorant à café non laitier selon l'une quelconque revendication précédente, dans laquelle la composition est exempte d'acide aspartique et d'acide glutamique.

11. Kit comprenant :
(a) un ou plusieurs ingrédients de boisson ; et
(b) la composition de colorant à café non laitier selon l'une quelconque des revendications 1 à 10.

12. Procédé de préparation d'une boisson consistant à mélanger la composition de colorant à café selon l'une quelconque des revendications 1 à 10, ou du kit de la revendication 11, avec de l'eau.
